# EUROPEAN PATENT SPECIFICATION

(11) **EP 4 492 186 B1**
(45) Date of publication and mention of the grant of the patent: **23.07.2025**
(21) Application number: 24186984.1
(22) Date of filing: 07.07.2024
(51) Int. Cl.: G05D 7/06, F24F 11/62

(54) **AUTOMATIC FLOW RATE (V) AND VALVE OPEN POSITION (KVS) ADAPTION**
AUTOMATISCHE ANPASSUNG DER FLUSSRATE (V) UND DER GEÖFFNETEN VENTILPOSITION (KMS)
ADAPTATION AUTOMATIQUE DE DÉBIT (V) ET DE POSITION OUVERTE DE SOUPAPE (KFS)

(30) Priority: 13.07.2023 CH 7502023
(43) Date of publication of application: 15.01.2025
(73) Proprietor: Belimo Holding SA, 8340 Hinwil (CH)
(72) Inventor: Luchsinger, Christian, 8854 Siebnen (CH); Reider, Forest, 8340 Hinwil (CH)
(74) Representative: Lermer, Christoph

(56) References cited:
- WO-A1-2022/029127
- US-B1- 6 352 106
- US-B2- 9 874 880

## Description

### TECHNICAL FIELD

The application relates to a flow control unit comprising: an actuator; a flow restricting element which is positioned by the actuator; and a device control unit for controlling the actuation of the actuator, wherein the device control unit is configured for receiving a plurality of setpoint input values from an external unit over time and outputting control signals responsive to the evaluation of the setpoint input values and/or stored parameters. Furthermore, the application relates to a method for controlling a flow control unit, particularly a flow control unit as described above, comprising the following step of (a) producing a plurality of setpoint values of an open position (Pos_set') of a flow restricting element of the flow control unit and/or flow rate (Vset') of fluid flowing through a flow restricting element and/or power flow rate (Pset') of fluid flowing through a flow restricting element over time responsive to the evaluation of setpoint input values received from an external unit and/or stored parameters.

### BACKGROUND OF THE INVENTION

In many applications a medium or fluid flowing through a system has to be controlled under varying environmental conditions. An application for such systems is the field of heating, ventilation and air-conditioning systems (HVAC) of buildings, ships and trains, in particular residential buildings, office buildings, commercial buildings and industrial buildings, etc. These systems may be quite complex. They may comprise a plurality of valves, dampers, pumps, actuators for actuating the valves and dampers, sensors, or combinations thereof. Particularly, modern water or other medium based heating or cooling systems use flow control loops, using position control or pressure independent flow control, or pressure and temperature independent power control of fluid flowing through adjustable valves.

In these systems automatic fluid flow control has become more and more important in order to increase the efficiency of the system. Improving the control of the valves may reduce energy consumption of the system. For example, conventional fluid control systems may have valves with a locally adjusted maximum open position (Pos_max) of the valve. Hydraulic balancing is very important in HVAC systems, and the present invention facilitates providing the desired flow within each strand or branch and zone, respectively. Balancing valves or valve flow or power flow regulation are needed.

A regulating valve is characterized by its Kvs value (metric unities) or the analogue Cv value (imperial unities) at its fully-open valve position. By limiting the maximum open position Pos_max the Kvs or Cv value can be adapted software-wise.

The Kvs value expresses the amount of flow in m³/hr of a fully open valve with produces a pressure drop of 1 bar. Cv is the equivalent coefficient, using Imperial instead of metric units (Kvs = Cv x 1.03). The control valves have to be selected to have their Kvs respectively Cv values in a certain range to allow flow balancing.

The setting can be performed from a remote location or locally for each valve assembly. US 9,534,795 B2 discloses adjusting one or both of the dual minimum flow rates and the maximum flow rate either locally or remotely. US 6,352,106 B1 discloses a valve control apparatus, wherein the maximum set point value of a flow rate and/or valve open position, is adapted according to a generic learning algorithm evaluating set point values.

However, it appears that often the setting of flow control values of individual valves does not result in a most efficient performance of the system over time. In fact, when balancing a system, maximum load requirements have to be considered. When environmental conditions (e.g. seasonal temperature) change, the settings would have to be updated in order to obtain the best performance of the system.

### OBJECT OF THE INVENTION

Therefore, it is an object of the invention to provide a flow control unit and a method for controlling the flow control unit, particularly for use in a HVAC system, having improved energy efficiency.

### TECHNICAL SOLUTION

This object is attained by providing a flow control unit according to claim 1 and a method for operating the flow control unit according to claim 10. The dependent claims refer to features of preferred embodiments of the invention.

A flow control unit according to the invention comprises:
an actuator;
a flow restricting element which is positioned by the actuator; and
a device control unit for controlling the actuation of the actuator, wherein the device control unit is configured for receiving a plurality of setpoint input values from an external unit (1) over time and outputting control signals responsive to an evaluation of the setpoint input values and/or stored parameters.

The device control unit is configured for setting a maximum setpoint value of an open position (Pos_max) of the flow restricting element and/or a maximum setpoint value of a flow rate (Vmax) flowing through the flow restricting element and/or a maximum setpoint value of a power flow rate (Pmax) flowing through the flow restricting element, and for adapting the maximum setpoint value of the open position (Pos_max) and/or the maximum setpoint value of the flow rate (Vmax) and/or the maximum setpoint value of the power flow rate (Pmax) of the flow restricting element according to a generic learning algorithm evaluating the setpoint input values.

The flow control unit may be a valve assembly comprising a flow restricting element, e.g. a valve which may include a stationary portion (body) and a moveable portion (shutter). Valves are usually used for regulating the flow of a liquid fluid. In an alternative embodiment the flow control unit may be a Variable Air Volume Unit (VAV; damper), wherein the flow restricting element comprises at least one damper blade, and the flow control unit comprises a flow sensor. VAV applications are usually used for regulating the flow of gaseous fluids like air. Pressure-independent VAV's use a flow controller to achieve a flow rate according to a (variable) setpoint input regardless of variations in system inlet pressure.

The flow sensor may be a differential pressure sensor, an ultrasonic sensor, an anemometer, etc.

The device control unit may be integrated in the actuator. Typical input values for the device control unit are a (relative) valve open position (Pos_set) and/or a (relative) flow rate (Vset) and/or a (relative) power flow rate (Pset) of fluid flowing through the flow restricting element, or a differential pressure. The control signals may be or correspond to (absolute) setpoint values for the positioning of the fluid restricting element. Stored parameters may be setpoint values recorded in the device control unit, e.g. historical setpoint values, or system parameters like a maximum design opening of the fluid restricting element. The relative values may relate to the maximum design opening of the fluid restricting element, or to a predetermined maximum open value, e.g. set by a software parameter.

Pos_set may be a relative open position of the flow restricting element of the valve, referring to an actuator position. By means of the open position of the flow restricting element a flow coefficient of a specific valve can be set, which defines the flow rate through the valve at a constant pressure difference across the valve.

Hence, the open position is dependent on the design of the valve assembly and is related to the flow rate (m³/s) of fluid which has to be achieved and to a given pressure difference across the valve.

Kv is the flow coefficient in metric units of a valve at a specific open position Pos. It is defined as the flow rate in cubic meters per hour [m3/h] of water with a pressure drop across the valve of 1 bar. The flow coefficient at the maximum open position Pos_max of the valve is called the Kvs value. Adjusting the Pos_max value therefore adjusts the Kvs value of the valve.

Cv is the corresponding flow coefficient in imperial units. It is defined as the flow rate in US Gallons per minute [gpm] of water with a pressure drop across the valve of 1 psi.

Furthermore, a characteristic curve of the flow restricting element may be stored which allows converting Kvs values and open position values Pos of the flow restricting element.

P is a power flow rate (J/s). The power flow rate may be determined by measuring and evaluating the temperature difference between the fluid entering a heat transfer system (heat source/consumer) and the temperature of fluid returning from the heat transfer system as well as the flow rate of the fluid and the fluid properties.

In case of a gas/air the humidity of the supply air and the humidity of return air needs to be considered.

The flow control unit observes the setpoint input value, namely the open position/angle and/or flow/power requested by a building management system (BMS) over a long period of time. In fact, the method is executed continuously, or at certain points in time, or sequentially during an operational period. The method is performed over a long period of time, i.e. the maximum setpoint values decrease slowly. In this way, a continuously adapted balancing of the system may be obtained. After the operational time (e.g. when environmental conditions change significantly) the maximum setpoint values may be increased quickly, e.g. on demand.

The operational period may
(a) be determined by points in time when operational conditions are subject to change, e.g. due to environmental changes such as seasonal changes, day or night, predefined weather condition, change of use, change of loads, etc., or
(b) be a fixed time period, e.g. x hours, y days, z months, daytime/nighttime, etc, where x, y, z may be any predetermined or calculated number; or
(c) be determined by a number of (measured) values N, where N>2. It is preferred that there are multiple values N from the past (measured), values extrapolated from past values, values calculated from past values (e.g. weighted average of N past values).

In addition to the adjustable maximum setpoint value the algorithm may have a minimum value Pos_min, Vmin and Pmin, respectively, which may be defined values which may represent a low limit or minimum threshold for the maximum setpoint values set by the algorithm. If this value is reached, no further decrease of the maximum setpoint value is admissible.

The maximum setpoint value may be a fraction (e.g. 20%) of a design value or of a user defined value. The adjusted maximum setpoint value may be any function of setpoint input values measured during a particular period of time. The measured input values may be filtered before being evaluated (e.g. for eliminating spikes).

The control of the valve may be pressure dependent (e.g. in the case of position control) or pressure independent (e.g. in the case of flow/power control, electronic pressure independent valve respectively EPIV, feedback control).

The control unit may perform feedback control by controlling a sensed actual flow rate or power flow rate of fluid flowing through a pipe part or branch of a system, comparing the actual flow rate and power flow rate, respectively, and the setpoint input value received from a temperature control, and responsively outputting a control signal related to the comparison.

When setting a new maximum setpoint value, the operating range of the valve assembly may be adapted.

In a preferred embodiment of the invention the flow control unit is configured for adapting the maximum setpoint value of the valve open position (Pos_max/Kvs) and/or the flow rate (Vmax) and/or the power flow rate (Pmax) by reducing the maximum setpoint value to a reduced maximum setpoint value.

The device control unit is configured for reducing the maximum setpoint value to a reduced maximum setpoint value when a maximum setpoint input value has not been reached or exceeded by the setpoint input values produced by an external unit over a certain period of time.

Particularly, the generic learning algorithm automatically reduces the maximum admissible setpoint values for respective setpoint input values received by the control unit from the external control unit to the valve assembly and a flow/power rate controller, respectively. The new maximum setpoint value lies between a lower threshold and a user defined maximum flow.

An intelligent learning algorithm is used to set or suggest a lower Pos_max/ Kvs, Vmax or Pmax value (e.g., in case of oversized valves), when the opening angle for a valve (set Pos value), the flow value (set V value) and the power value (P), respectively, have never reached the maximum opening angle (Pos_max), maximum Flow value (Vmax) or maximum Power value (Pmax) in a predetermined period before updating the maximum setpoint value.

Another algorithm comprises that the device control unit is configured for reducing the maximum setpoint value to a reduced maximum setpoint value when a maximum setpoint input value has been exceeded by any of the setpoints input values produced by an external unit, and a plurality of setpoints produced by the external unit immediately after the maximum setpoint input value has been exceeded is below the maximum setpoint input value. In other words, when the maximum setpoint value (Pos_max, Vmax, Pmax) is reached or exceeded, however, only for a short time, i.e. when the external control (BMS) immediately reduces the signal again, the maximum setpoint value may just the same be reduced by the algorithm.

The term "immediately" may include that the maximum setpoint value is reduced when the current maximum setpoint input value is reached for no longer than a defined time interval. The time interval can be set depending on the application. The minimum may be around 1 minute, a maximum of maybe 1-2 hours (for very sluggish systems such as underfloor heating).

In another embodiment of the invention the algorithm is based on the evaluation of oscillations of the setpoint input signals received form an external unit. In this case the maximum setpoint value is determined based on oscillation detection. If the system oscillates and the maximum setpoint input value has not been reached, then the maximum setpoint input value is reduced to a value where the system no longer oscillates or where the minimum allowed maximum setpoint value has been reached. In particular, oscillation detection uses an algorithm for detecting whether the values output by the external control unit oscillate, e.g. by FFT (Fast Fourier-Transformation) and/or by counting zero crossings of the oscillation. In other applications the algorithm may include applying limits to allowed drive movement in a predetermined period of time, e.g. the total travel distance and number of direction changes of the actuator responsive to setpoint input signals received from an external control unit. If the limit values are exceeded then Pos_max, Vmax and/or Pmax will be reduced.

In a HVAC system comprising the described flow control unit there may be at least one heat exchanger which is in fluid connection with the flow restricting element. The fluid control unit be a component of a HVAC system and it may be in fluid connection with the heat exchanger, a radiator, a floor heating, a water to air heat exchanger, etc.

The heat exchanger may be located in a zone to be heated or cooled and a temperature sensor may be arranged in the zone. The heat exchanger heats or cools a particular heating/cooling zone of a building. Particularly, the method may be used in a HVAC system having a plurality of user devices and heating/cooling zones.

The temperature (Tm) measured by the temperature sensor in the zone may be provided as a feedback signal to an external control or a business management system (BMS) generating a (temperature) setpoint signal. This signal is a setpoint input signal for the inventive flow control unit.

The device control unit may be configured for providing position control of the actuator and the flow (rate) restricting element, respectively, and/or flow (rate) control of fluid flowing through the flow (rate) restricting element and/or power flow (rate) control of fluid flowing through the flow (rate) restricting element.

The flow control unit may comprise a flow sensor (preferably an ultrasonic flow sensor) for measuring the flow rate or a power flow rate of fluid flowing through the flow (rate) restricting element and a temperature difference sensor for providing a temperature difference between a supply and a return temperature of a fluid, and a flow controller for feedback control of the flow and power, respectively, flowing through the flow (rate) restricting element.

Power flow rate control may be included in a flow rate control loop, or it may be implemented as a further loop in the flow control unit.

A method for controlling a flow control unit, particularly a flow control unit, e.g. a valve assembly, as described before, comprises the following steps:
(a) Producing a plurality of setpoint values of an open position (Pos_set') of a flow restricting element and/or a plurality of setpoint values of a flow rate (Vset') and or a plurality of setpoint values of a power flow rate (Pset') of fluid flowing through a flow restricting element of the flow control unit over time responsive to the evaluation of setpoint input values received from an external unit and/or stored parameters,
(b) setting a maximum setpoint value of the open position (Pos_max) and/or the flow rate (Vmax) and/or the power flow rate (Pmax) for the setpoint values, and adapting the maximum setpoint value of the open position (Pos_max) of the flow restricting element and/or of the flow rate (Vmax) flowing through the flow restricting element and/or of the power flow rate (Pmax) flowing through the flow restricting element according to a generic learning algorithm evaluating the setpoint input values.

Step (b) may comprise adapting the maximum setpoint value of the open position (Pos_max) and/or of the flow rate (Vmax) and/or of the power flow rate (Pmax) by reducing the maximum setpoint value to a reduced maximum setpoint value.

Reducing the maximum setpoint value to a reduced maximum setpoint value is performed when the maximum setpoint value has not been exceeded by the setpoints input values received from an external unit (and received by a device control unit) over a certain period of time, or reducing the maximum setpoint value to a reduced maximum setpoint value is performed when the maximum setpoint input values received by a device control unit from an external controller has been exceeded by any of the setpoint input values received by the device control unit, and a plurality of setpoint input values received by the device control unit immediately after the maximum input value has been exceeded is below the maximum input value.

When applying an algorithm according to the invention, the reduced maximum setpoint value Pos_max/ Vmax/ Pmax is e.g. 20% or 30% of the design value. Whenever a setpoint input value exceeds the maximum setpoint input value, a new reduced setpoint value (corresponding to the current maximum setpoint value) is automatically set. At the same time, update of the operation range of the valve assembly and/or update of a correction curve of the valve assembly may be performed. The correction curve may map a position setpoint Pos_set to a corrected position setpoint Pos_set' and be implemented as a mathematical function or a look table. In a particular embodiment the correction curve is a linear curve or an equal percentage curve.

Generally, any algorithm that systematically reduces the maximum setpoint values for position Pos_max, mass flow rate Vmax and power flow rate Pmax, respectively, automatically when certain conditions are met, may be applicable within the scope of this invention. For example, the algorithm may be configured for reducing the maximum setpoint value when this value is not or rarely reached during regular operation. The reduced value may be the highest setpoint provided by the device control unit during an operational period. Alternatively, the maximum setpoint value may be a threshold value calculated using setpoints produced by the external control unit or by the device control unit during an operational period and/or using stored parameters. For example, the threshold value may correspond to the highest setpoint input value (or the highest setpoint input value after filtering) produced by the external control unit or to the highest setpoint value (or the highest setpoint value after filtering) produced by the device control unit during an operational period plus a fixed value or multiplied by a factor, e.g. a factor >1, or any other functional relation. In another example, it may be calculated as a multiple of an average value of the setpoint input values (or filtered setpoint input values) produced by the external control unit or of the setpoint values (or setpoint values after filtering) produced by the device control unit during an operational period, e.g. an average setpoint value over an operational period multiplied by a factor, e.g. a factor >1, or any other functional relation. The values mentioned above are examples of parameters used by the algorithm.

In general, according to the disclosure of this invention a generic learning algorithm may be any method or algorithm which may be applied to any number of received setpoint input values and/or previously stored values which may include applying statistical methods such as determining a maximum, an average, filtering of data, machine learning etc.

In another example, the algorithm may lower the maximum value after detecting that, whenever the maximum value has been reached during an operational period, the system immediately reduces the request signal (setpoint) again.

Another embodiment of the inventive method may comprise oscillation control as described above.

As a result, the invention provides various advantages; First, a more stable control is provided. Stable control means that reduced Pos_max, Vmax and Pmax, respectively, may slow down an "aggressive" superior controller effectively. A reduction of the maximum value could drastically reduce oscillations observed on the setpoint signal. In case of flow control, the full resolution of the controller can be used. Second, actuator movement may be reduced and thus actuator lifetime increases. Third, the valve design may be automatically adapted even in case of change of use, change of conditions (smaller or larger heat loads), since sizing errors are automatically detected and corrected. As there is a high probability that the valve design was initially oversized, an adjustment via software can be provided.

### BRIEF DESCRIPTION OF THE DRAWINGS

The invention will be explained in greater detail with reference to the exemplary embodiments which are illustrated in the drawings.
Fig. 1 is a block diagram illustrating a first control loop according to the invention;
Fig. 2 is a block diagram illustrating a second control loop according to the invention;
Fig. 3 is a diagram showing a practical result when applying the method according to the invention;
Fig. 4 is a result of a simulation when applying the method according to the invention.

### DESCRIPTION OF PREFERRED EMBODIMENTS OF THE INVENTION

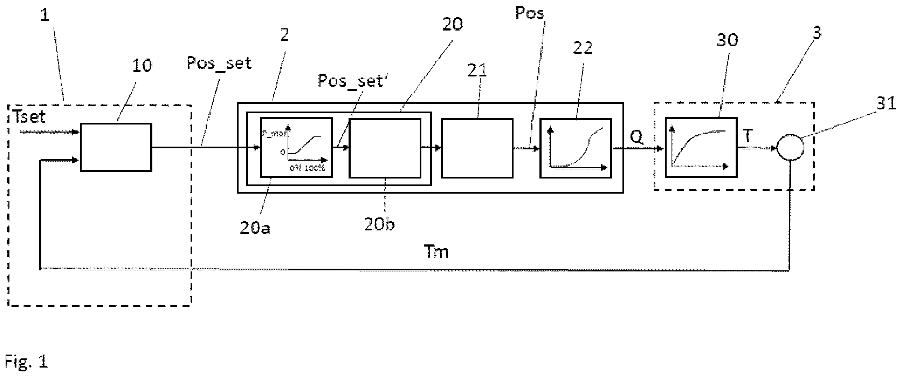

Fig. 1 is a block diagram illustrating a first control loop according to the invention, namely, a position control loop in a valve system, respectively a flow control unit 2. In this loop the air/medium temperature in a zone 3 is controlled with direct position control of a valve.

An external control 1 provides a temperature setpoint Tset. A temperature setpoint Tset may be set by a user manually or by a program automatically. The temperature setpoint Tset and a measured temperature value Tm are provided to a temperature control unit 10, also being part of the external controller 1. It evaluates the difference Tset-Tm, determines a control value for temperature control and provides it as position setpoint input value P_set to a flow control unit 2. The flow control unit 2 comprises an actuator 21, a valve 22 having a moveable element, such as a valve ball or a valve disc, driven by the actuator 21, and a device control unit 20. The device control unit 20 may be integrated in the actuator, which typically also includes a gear unit and an electrical motor. The device control unit 20 includes a scaling unit 20a and an actuator position control unit 20b. Furthermore, a heat exchanger 30, e.g. a radiator, is arranged in or near a zone 3 to be heated or cooled. The heat exchanger 30 is in fluid connection with the valve 22.

In the zone 3 at least one temperature sensor 31 is arranged which measures the temperature T in the zone 3 and sends the measured temperature Tm as feedback signal to the external control 1.

The temperature control 10 evaluates the temperature difference Tset-Tm and outputs a position setpoint input Pos_set to the device control unit 20. The position setpoint input Pos_set typically is a relative value between 0 to 100% corresponding to a relative opening of the valve. The position setpoint input can be provided by an analogue signal (e.g. 0 to 10V) or a digital signal via a digital communication bus. In the scaling unit 20a the position setpoint input is scaled to a physical actuation range of the valve, e,g. 0 .. 90 °, and provides a corrected position setpoint P_set' to the actuator position control unit 20b. The actuator 21 actuates the moving element of the valve 22 until the Position value Pos of the valve 22 as control value corresponds to the corrected position setpoint Pos_set'. Having reached the requested scaled position setpoint value Pos_set' a defined heat flow Q is provided to the heat exchanger 30. The heat exchanger 30 heats or cools the air (or any other medium) in the zone 3.

The temperature control unit 10 outputs a position setpoint input value Pos_set which may be variable in time.

Since most of the year the system typically operates at lower loads, according to the invention the flow control unit 2 (particularly the device control unit with the scaling unit) applies an algorithm to the setpoint input values Pos_set obtained from the temperature control 10 and/or stored values (Pos_des; previously recorded values) in order to lower the maximum position setpoint value Pos_max, to a new maximum position setpoint value Pos_max_1<Pos_des. The algorithm is usually applied continuously or sequentially over a long period of time (operational time). Particularly, when a plurality of setpoint input values Pos_set (or filtered setpoint input values Pos_set) never exceed a value Pos_1, the maximum setpoint value Pos_max is determined and set to be Pos_1. When, in a following sequence, a plurality of setpoint input values Pos_set (or filtered setpoint input values Pos_set) never exceed a value Pos_2<Pos_1, the maximum setpoint value Pos_max is determined and set to be Pos_2. This algorithm is repeated as long as the system is in the operating mode. When terminating the operating mode the maximum setpoint value Pos_max may be reset to a higher value. The reset may be accomplished quickly, e.g. on demand, compared with the period (operational time) of the operating mode.

In other words, according to the invention a part of the flow control unit 2, e.g. the device control unit 20, applies an algorithm to the setpoint input values obtained from the temperature control unit 10 and/or stored values (Pos_des; previously recorded values) in order to determine and set a lower maximum setpoint value Pos_max for further operation of the valve assembly.

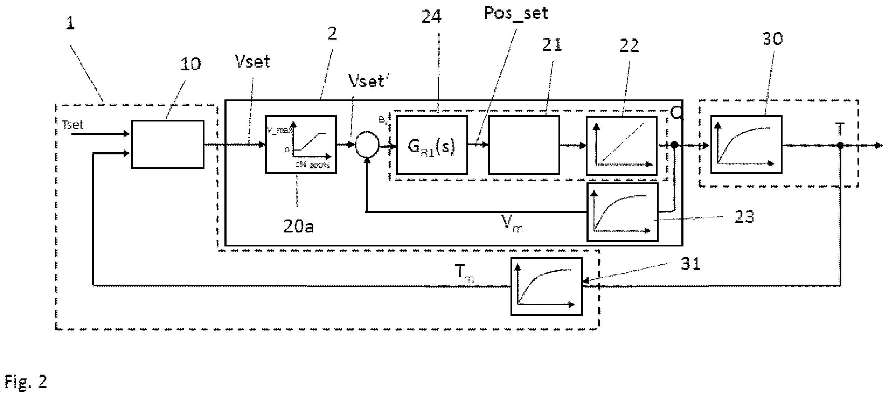

Fig. 2 is a block diagram illustrating a second control loop according to the invention, namely, a control loop including a flow control. In this embodiment the air/medium temperature in a zone 3 is controlled with flow control of a valve system, respectively a flow control unit 2. An outer loop is a temperature control loop and an inner loop is a flow control loop.

As in Fig. 1 an external control 1 provides a temperature setpoint Tset. A temperature setpoint Tset may be set by a user manually or by a program automatically. The temperature setpoint Tset and a measured temperature value Tm are provided to a temperature control unit 10, also being part of the external controller 1. It evaluates the difference Tset-Tm, determines a flow setpoint V_set and provides it as setpoint input value to the valve unit 2 comprising a device control unit with a scaling unit 20a and a flow controller 24, an actuator 21 and a valve 22 having a moveable element, such as a valve ball or a valve disc, driven by the actuator 21. The actuator 21 comprises a drive unit with a gear unit and an electrical motor. Furthermore, a heat exchanger 30, e.g. a radiator, is arranged in or near a zone 3 to be heated or cooled. The heat exchanger 30 is in fluid connection with the valve 22.

In the zone 3 at least one temperature sensor 31 is arranged which measures the temperature T in the zone 3 and sends the measured temperature Tm as feedback signal to the external control 1.

The temperature control unit 10 of the external control 1 receives the signal e_{T}, evaluates the signal e_{T} and outputs a flow rate setpoint, respectively flow rate setpoint input value Vset. The scaling unit 20a generates a scaled flow rate setpoint Vset'. Using the scaled setpoint Vset' and a measured flow rate Vm measured by a flow sensor 23 arranged in the fluid path between the valve 22 and the heat exchanger 30, a difference value e_{V} is calculated and provided to the flow controller 24. A position setpoint Pos_set for the actuator resulting from an evaluation performed in the flow controller 24 is provided to the actuator 21 as a control signal for actuating the valve 22.

A part of the flow control unit, e.g. the actuator 21 or the flow sensor 23 may include the device control unit with the scaling unit 20a and the flow controller 24.

According to the invention, the scaling unit 20a outputs a scaled setpoint Vset' to the flow controller 24 which may be variable in time. In conventional systems the flow rate value V may assume any value which is physically possible between zero (V=0) and a design maximum (V=Vdes), i.e. V_max=V_des. However, according to the invention the scaling unit 20a applies an algorithm to received flow rate setpoint input values Vset and/or stored values (Vdes; previously recorded values) in order to lower the maximum flow rate setpoint value (threshold) Vmax<Vdes when certain criteria are met. The algorithm may also be applied to produced flow rate setpoint values Vset' and/or stored values (Vdes; previously recorded values) in order to lower the maximum flow rate setpoint value (threshold) Vmax<Vdes when certain criteria are met.

The algorithm is usually applied continuously or sequentially over a long period of time. Particularly, when a plurality of scaled setpoint values Vset' responsive to setpoint input values Vset (or filtered setpoint input values Vset) never exceeds a value V1 within a predetermined period of time, the maximum setpoint value Vmax is determined and set to be Vmax=V1. When, in a following sequence, a plurality of scaled setpoint values Vset' (or filtered setpoint values Vset') never exceeds a value V2<V1, the maximum setpoint value is determined and set to be Vmax=V2<V1. This algorithm is repeated as long as the system is in the operating mode.

When terminating the operating mode the maximum setpoint value Vmax may be reset to a higher value. The reset may be accomplished quickly, e.g. on demand, compared with the period of the operating mode.

In other words, according to the invention the flow rate control unit 2 applies an algorithm to the values obtained from the external unit 1 and/or stored values (e.g. Vdes; previously recorded values) in order to determine and set a lower maximum value Vmax of the flow rate for further operation of the valve unit when certain criteria are met.

The maximum values of open position of the valve Pos_max/Kvs, mass flow rate Vmax and power flow rate Pmax, respectively, are adapted via generic learning.

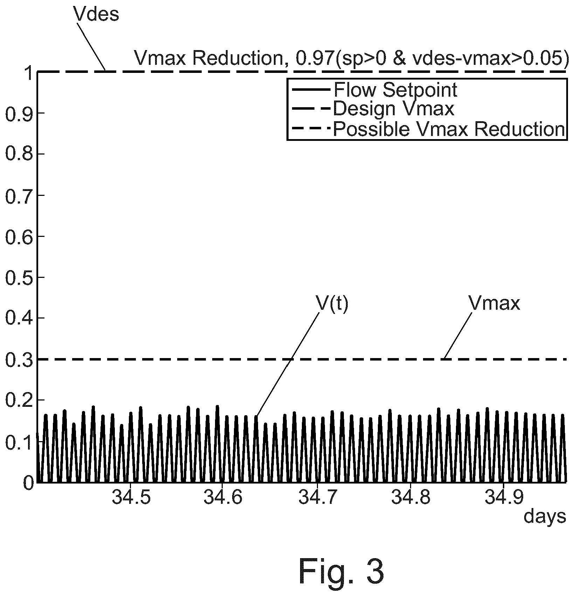

An example of real world data is illustrated in Fig. 3. The system according to Fig. 2 produces setpoint values of the flow rate V (y axis) during a certain period of time (x axis). The design value Vdes of maximum possible flow is 100%, which corresponds to the nominal flow of the flow control unit (solid line). By applying an algorithm according to the invention, the reduced maximum value of the open position of the valve leads to a reduced value Vmax of e.g. 30% (dotted line) of Vdes. The values have been adopted or calculated based on previous setpoints received or produced (based on the received input setpoint values) by the flow control unit 2. The maximum setpoint value may be reduced again when certain conditions are met.

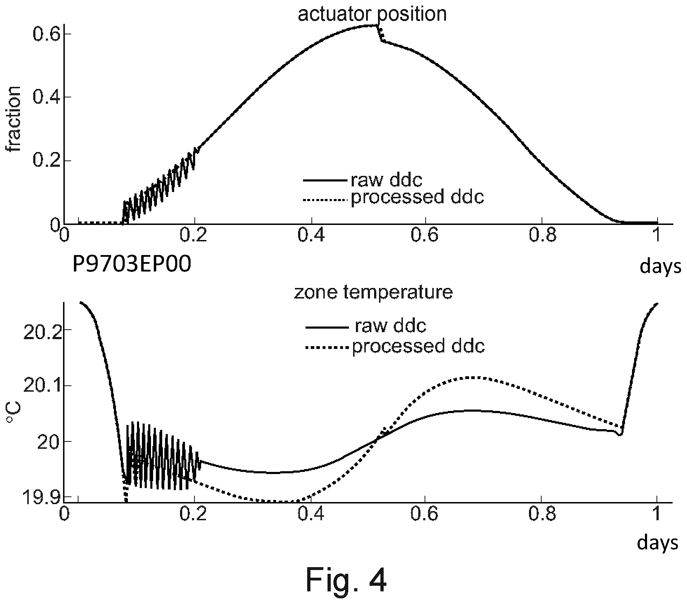

Fig. 4 is a simulation illustrating the effect of using an algorithm for automatically reducing the maximum value Pos_max, Vmax and Pmax, respectively, when certain conditions are met. The maximum values are adapted by generic learning.

Fig. 4 is a comparison of raw data without using the algorithm of the invention and processed data using the algorithm of the invention. The upper graphical representation is the actuator position over time. The lower graphical representation illustrates the corresponding zone temperature T over time. It can be seen that fluctuations are more frequent when using raw data instead of using processed data. Therefore, the actuator travel and actuator direction changes are more frequent when using raw data instead of using processed data. The efficiency of the system in the case of using processed data is better.

As a result, the invention provides various advantages; First, a more stable control is provided. Stable control means that reduced Pos_max, Vmax or Pmax, respectively, may slow down an "aggressive" superior controller effectively. A reduction of the maximum value could drastically reduce oscillations observed on the setpoint signal. The full resolution of the controller can be used. Second, actuator movement is reduced and thus actuator lifetime increases. Third, the valve design may be automatically adapted even in case of change of use, change of conditions (smaller or larger heat loads), since sizing errors of the valve are automatically detected and corrected.

## Claims

1. A flow control unit (2) comprising:
an actuator (21);
a flow restricting element (22) which is positioned by the actuator (21); and
a device control unit (20) for controlling actuation of the actuator (21), wherein the device control unit (20) is configured for receiving over time a plurality of setpoint input values from an external unit (1) and generating setpoint values responsive to an evaluation of the setpoint input values and/or stored parameters,
**characterized in that**
the device control unit (20) is configured for setting a maximum setpoint value of an open position (Pos_max) of the flow restricting element (22) and/or a maximum setpoint value of a flow rate (Vmax) flowing through the flow restricting element (22) and/or a maximum setpoint value of a power flow rate (Pmax) flowing through the flow restricting element (22), and for adapting the maximum setpoint value of the open position (Pos_max) and/or the maximum setpoint value of the flow rate (Vmax) and/or the maximum setpoint value of the power flow rate (Pmax) of the flow restricting element (22) according to a generic learning algorithm evaluating the setpoint input values, wherein
the device control unit (20) is configured for reducing the maximum setpoint value to a reduced maximum setpoint value when a maximum setpoint input value has not been reached or exceeded by the setpoint input values received by the device control unit (20) over a period of time, or the device control unit (20) is configured for reducing the maximum setpoint value to a reduced maximum setpoint value when a maximum setpoint input value has been exceeded by any of the setpoint input values received by the device control unit (20), and a plurality of setpoint input values received by the device control unit (20) after the maximum setpoint input value has been exceeded is below the maximum setpoint input value.

2. The flow control unit (2) of claim 1, wherein
the device control unit (20) is configured for adapting the maximum setpoint value of the open position (Pos_max) of the flow restricting element (22) and/or of the flow rate (Vmax) flowing through the flow restricting element (22) and/or of the power flow rate (Pmax) flowing through the flow restricting element (22) by reducing the maximum setpoint value to a reduced maximum setpoint value.

3. The flow control unit (2) of claim 1 or 2, wherein the period of time is an operational period defined by any of the following criteria:
(a) the period of time is determined by points in time when operational conditions are subject to change, e.g. due to environmental changes such as seasonal changes, day or night, predefined weather condition, change of use, change of loads, etc., or
(b) the period of time is a fixed time period, e.g. x hours, y days, z months, daytime/nighttime, etc, where x, y, z may be any predetermined or calculated number; or
(c) the period of time is determined by a number of (measured) values N, where N>2. It is preferred that there are multiple values N from the past (measured), values extrapolated from past values, values calculated from past values (e.g. weighted average of N past values).

4. The flow control unit (2) of any of the previous claims, wherein the generic learning algorithm includes a statistical algorithm, data filtering and/or machine learning.

5. The flow control unit (2) of any of the previous claims, wherein
the device control unit (20) is configured for providing position control of the actuator (21) and the flow restricting element (22), respectively, and/or flow rate control of fluid flowing through the flow restricting element (22) and/or power flow rate control of fluid flowing through the flow restricting element (22).

6. The flow control unit (2) of any of the previous claims, wherein
the flow control unit (2) comprises a flow sensor (23) for measuring the flow rate (V) of fluid flowing through the flow restricting element (22), and a flow controller (24) for feedback control of the flow, flowing through the flow restricting element (22).

7. The flow control unit (2) of any of the previous claims, wherein
the flow control unit (2) comprises a flow sensor (23) for measuring the flow rate (V) of fluid flowing through the flow restricting element (22) and a temperature difference sensor for providing a temperature difference between a supply and a return temperature of a fluid, and a power controller for feedback control of the power, flowing through the flow restricting element (22).

8. The flow control unit (2) of any of the previous claims 1 to 7, wherein
the flow control unit (2) is a valve assembly, and the flow restricting element (22) is a valve.

9. The flow control unit (2) of any of the previous claims 1 to 7, wherein
the flow control unit (2) is a Variable Air Volume Unit (VAV), the flow restricting element (22) comprises at least one damper blade, and the flow control unit (2) comprises a flow sensor.

10. A method for controlling a flow control unit (2), comprising the following steps:
(a) Producing a plurality of setpoint values of an open position (Pos_set') of a flow restricting element (22) of the flow control unit (2) and/or a plurality of setpoint values of a flow rate (Vset') and/or a plurality of setpoint values of a power flow rate (Pset') of fluid flowing through the flow restricting element (22) of the flow control unit (2) over time responsive to the evaluation of setpoint input values received from an external unit (1) and/or stored parameters,
(b) setting a maximum setpoint value of the open position (Pos_max) of the flow restricting element (22) and/or the flow rate (Vmax) and/or the power flow rate (Pmax), and adapting the maximum setpoint value of the open position (Pos_max) of the flow restricting element (22) and/or the flow rate (Vmax) flowing through the flow restricting element (22) and/or the power flow rate (Pmax) flowing through the flow restricting element (22) according to a generic learning algorithm evaluating the setpoint input values, wherein
reducing the maximum setpoint value to a reduced maximum setpoint value is performed when a maximum setpoint input value has not been exceeded by the setpoint input values received by a device control unit (20) over a period of time, or reducing the maximum setpoint value to a reduced maximum setpoint value is performed when a maximum setpoint input value has been exceeded by any of the setpoint input values received by a device control unit (20), and a plurality of setpoint input values received by the device control unit (20) immediately after the maximum setpoint input value has been exceeded is below the maximum setpoint input value.

11. The method of claim 10, wherein
step (b) comprises adapting the maximum setpoint value of the open position (Pos_max) of the flow restricting element (22) and/or the flow rate (Vmax) flowing through the flow restricting element (22) and/or the power flow rate (Pmax) flowing through the flow restricting element (22) by reducing the maximum setpoint value to a reduced maximum setpoint value.

12. The method of claim 10 or 11, wherein the period of time is an operational period defined by any of the following criteria:
(a) the period of time is determined by points in time when operational conditions are subject to change, e.g. due to environmental changes such as seasonal changes, day or night, predefined weather condition, change of use, change of loads, etc., or
(b) the period of time is a fixed time period, e.g. x hours, y days, z months, daytime/nighttime, etc, where x, y, z may be any predetermined or calculated number; or
(c) the period of time is determined by a number of (measured) values N, where N>2. It is preferred that there are multiple values N from the past (measured), values extrapolated from past values, values calculated from past values (e.g. weighted average of N past values).

13. The method of any of claims 10 -12, wherein the generic learning algorithm includes a statistical algorithm, data filtering and/or machine learning.

## Patentansprüche

1. Durchflusssteuereinheit (2) mit:
einem Aktuator (21);
einem Durchflussbegrenzungselement (22), das durch den Aktuator (21) positioniert wird; und
eine Gerätesteuereinheit (20) zur Steuerung der Betätigung des Aktuators (21), wobei die Gerätesteuereinheit (20) dazu ausgelegt ist, über die Zeit eine Vielzahl von Sollwerteingangswerten von einer externen Einheit (1) zu empfangen und Sollwerte in Abhängigkeit von einer Auswertung der Sollwerteingangswerte und/oder gespeicherter Parameter zu erzeugen,
**dadurch gekennzeichnet**
die Gerätesteuereinheit (20) zum Einstellen eines maximalen Sollwertes einer Öffnungsstellung (Pos_max) des Durchflussbegrenzungselements (22) und/oder eines maximalen Sollwertes einer durch das Durchflussbegrenzungselement (22) fließenden Durchflussmenge (Vmax) und/oder eines maximalen Sollwertes einer durch das Durchflussbegrenzungselement (22) fließenden Leistungsdurchflussmenge (Pmax) und zum Anpassen des maximalen Sollwerts der Öffnungsstellung (Pos_max) und/oder des maximalen Sollwerts der Durchflussmenge (Vmax) und/oder des maximalen Sollwerts der Leistungsdurchflussmenge (Pmax) des Durchflussbegrenzungselements (22) gemäß einem generischen Lernalgorithmus, der die Sollwerteingangswerte auswertet, wobei
die Gerätesteuereinheit (20) dazu konfiguriert ist, den maximalen Sollwert auf einen reduzierten maximalen Sollwert zu reduzieren, wenn ein maximaler Sollwert durch die von der Gerätesteuereinheit (20) über einen Zeitraum empfangenen Sollwerteingaben nicht erreicht oder überschritten wurde, oder die Gerätesteuereinheit (20) dazu ausgelegt ist, den maximalen Sollwert auf einen reduzierten maximalen Sollwert zu reduzieren, wenn ein maximaler Sollwerteingangswert von einem der von der Gerätesteuereinheit (20) empfangenen Sollwerteingangswerte überschritten wurde und mehrere von der Gerätesteuereinheit (20) nach dem Überschreiten des maximalen Sollwerteingangswertes empfangene Sollwerteingangswerte unter dem maximalen Sollwerteingangswert liegen.

2. Durchflusssteuereinheit (2) nach Anspruch 1, wobei
die Gerätesteuereinheit (20) dazu ausgelegt ist, den maximalen Sollwert der Öffnungsstellung (Pos_max) des Durchflussbegrenzungselements (22) und/oder der durch das Durchflussbegrenzungselement (22) fließenden Durchflussmenge (Vmax) und/oder der durch das Durchflussbegrenzungselement (22) fließenden Leistungsdurchflussmenge (Pmax) durch Reduzieren des maximalen Sollwerts auf einen reduzierten maximalen Sollwert anzupassen.

3. Durchflusssteuereinheit (2) nach Anspruch 1 oder 2, wobei der Zeitraum ein Betriebszeitraum ist, der durch eines der folgenden Kriterien definiert ist:
(a) der Zeitraum wird durch Zeitpunkte bestimmt, zu denen sich die Betriebsbedingungen ändern, z. B. aufgrund von Umgebungsänderungen wie saisonalen Änderungen, Tag oder Nacht, vordefinierten Wetterbedingungen, Nutzungsänderungen, Laständerungen, usw., oder
(b) der Zeitraum ist ein fester Zeitraum, z. B. x Stunden, y Tage, z Monate, Tag/Nacht usw., wobei x, y, z beliebige vorbestimmte oder berechnete Zahlen sein können; oder
(c) der Zeitraum durch eine Anzahl von (gemessenen) Werten N bestimmt wird, wobei N > 2 ist, wobei es mehrere Werte N aus der Vergangenheit (gemessen), aus vergangenen Werten extrapolierte Werte, aus vergangenen Werten berechnete Werte (z. B. gewichteter Durchschnitt von N vergangenen Werten) gibt.

4. Durchflusssteuereinheit (2) nach einem der vorherigen Ansprüche, wobei der generische Lernalgorithmus einen statistischen Algorithmus, Datenfilterung und/oder maschinelles Lernen umfasst.

5. Durchflusssteuereinheit (2) nach einem der vorherigen Ansprüche, wobei
die Gerätesteuereinheit (20) so konfiguriert ist, dass sie eine Positionssteuerung des Aktuators (21) bzw. des Durchflussbegrenzungselements (22) und/oder eine Durchflussmengensteuerung des durch das Durchflussbegrenzungselement (22) strömenden Fluids und/oder eine Leistungsdurchflussmengensteuerung des durch das Durchflussbegrenzungselement (22) strömenden Fluids bereitstellt.

6. Durchflusssteuereinheit (2) nach einem der vorherigen Ansprüche, wobei
die Durchflusssteuereinheit (2) einen Durchflusssensor (23) zum Messen der Durchflussmenge (V) des durch das Durchflussbegrenzungselement (22) strömenden Fluids und einen Durchflussregler (24) zum Rückkoppeln der durch das Durchflussbegrenzungselement (22) strömenden Durchflussmenge umfasst.

7. Durchflusssteuereinheit (2) nach einem der vorstehenden Ansprüche, wobei
die Durchflusssteuereinheit (2) einen Durchflusssensor (23) zum Messen der Durchflussrate (V) des durch das Durchflussbegrenzungselement (22) strömenden Fluids und einen Temperaturdifferenzsensor zum Bereitstellen einer Temperaturdifferenz zwischen einer Zufuhr- und einer Rücklauftemperatur eines Fluids und einen Leistungsregler zum Rückkopplungsregeln der durch das Durchflussbegrenzungselement (22) fließenden Leistung umfasst.

8. Durchflusssteuereinheit (2) nach einem der vorstehenden Ansprüche 1 bis 7, wobei
die Durchflusssteuereinheit (2) eine Ventilanordnung ist und das Durchflussbegrenzungselement (22) ein Ventil ist.

9. Durchflusssteuereinheit (2) nach einem der vorstehenden Ansprüche 1 bis 7, wobei
die Durchflusssteuereinheit (2) eine variable Luftvolumenstromregelungseinheit (VAV) ist, das Durchflussbegrenzungselement (22) mindestens einen Luftklappenflügel umfasst und die Durchflusssteuereinheit (2) einen Durchflusssensor umfasst.

10. Verfahren zum Steuern einer Durchflusssteuereinheit (2), das die folgenden Schritte umfasst:
(a) Erzeugen einer Vielzahl von Sollwerten einer Öffnungsstellung (Pos_set') eines Durchflussbegrenzungselements (22) der Durchflusssteuereinheit (2) und/oder einer Vielzahl von Sollwerten einer Durchflussmenge (Vset') und/oder einer Vielzahl von Sollwerten einer Leistungsdurchflussmenge (Pset') von durch das Durchflussbegrenzungselement (22) der Durchflusssteuereinheit (2) strömendem Fluid über die Zeit in Abhängigkeit von Auswertung von von einer externen Einheit (1) empfangenen Sollwerteingangswerten und/oder gespeicherten Parametern,
(b) Festlegen eines maximalen Sollwertes der Öffnungsstellung (Pos_max) des Durchflussbegrenzungselements (22) und/oder der Durchflussmenge (Vmax) und/oder der Leistungsdurchflussmenge (Pmax), und Anpassen des maximalen Sollwerts der Öffnungsstellung (Pos_max) des Durchflussbegrenzungselements (22) und/oder der Durchflussmenge (Vmax) durch das Durchflussbegrenzungselement (22) und/oder der Leistungsdurchflussmenge (Pmax) durch das Durchflussbegrenzungselement (22) gemäß einem generischen Lernalgorithmus, der die Sollwerteingangswerte auswertet, wobei
das Reduzieren des maximalen Sollwertes auf einen reduzierten maximalen Sollwert erfolgt, wenn ein maximaler Sollwerteingabewert durch die von einer Gerätesteuereinheit (20) empfangenen Sollwerteingabewerte über einen Zeitraum nicht überschritten wurde, oder das Reduzieren des maximalen Sollwertes auf einen reduzierten maximalen Sollwert erfolgt, wenn ein maximaler Sollwerteingabewert von einem der von einer Gerätesteuereinheit (20) empfangenen Sollwerteingabewerte überschritten wurde und mehrere von der Gerätesteuereinheit (20) unmittelbar nach dem Überschreiten des maximalen Sollwerteingabewertes empfangene Sollwerteingabewerte unter dem maximalen Sollwerteingabewert liegen.

11. Verfahren nach Anspruch 10, wobei
Schritt (b) das Anpassen des maximalen Sollwerts der Öffnungsstellung (Pos_max) des Durchflussbegrenzungselements (22) und/oder der durch das Durchflussbegrenzungselement (22) fließenden Durchflussmenge (Vmax) und/oder der durch das Durchflussbegrenzungselement (22) fließenden Leistungsdurchflussmenge (Pmax) durch Reduzieren des maximalen Sollwerts auf einen reduzierten maximalen Sollwert umfasst.

12. Verfahren nach Anspruch 10 oder 11, wobei der Zeitraum ein Betriebszeitraum ist, der durch eines der folgenden Kriterien definiert ist:
(a) der Zeitraum wird durch Zeitpunkte bestimmt, zu denen sich die Betriebsbedingungen ändern können, z. B. aufgrund von Umgebungsänderungen wie saisonalen Änderungen, Tag oder Nacht, vordefinierten Wetterbedingungen, Nutzungsänderungen, Laständerungen usw., oder
(b) der Zeitraum ist ein fester Zeitraum, z. B. x Stunden, y Tage, z Monate, Tag/Nacht usw., wobei x, y, z beliebige vorbestimmte oder berechnete Zahlen sein können; oder
(c) der Zeitraum durch eine Anzahl von (gemessenen) Werten N bestimmt wird, wobei N > 2 ist, wobei es mehrere Werte N aus der Vergangenheit (gemessen), aus früheren Werten extrapolierte Werte, aus früheren Werten berechnete Werte (z. B. gewichteter Durchschnitt von N früheren Werten) gibt.

13. Verfahren nach einem der Ansprüche 10 bis 12, wobei der generische Lernalgorithmus einen statistischen Algorithmus, Datenfilterung und/oder maschinelles Lernen umfasst.

## Revendications

1. Unité de commande de débit (2) comprenant:
un actionneur (21);
un élément de restriction de débit (22) qui est positionné par l'actionneur (21); et
une unité de commande de dispositif (20) pour commander l'actionnement de l'actionneur (21), dans laquelle l'unité de commande de dispositif (20) est configurée pour recevoir au fil du temps une pluralité de valeurs de consigne d'entrée provenant d'une unité externe (1) et pour générer des valeurs de consigne en réponse à une évaluation des valeurs de consigne d'entrée et/ou de paramètres stockés,
**caractérisée en ce que**
l'unité de commande de dispositif (20) est configurée pour définir une valeur de consigne maximale d'une position ouverte (Pos_max) de l'élément de restriction de débit (22) et/ou une valeur de consigne maximale d'un débit (Vmax) s'écoulant à travers l'élément de restriction de débit (22) et/ou une valeur de consigne maximale d'un débit de puissance (Pmax) s'écoulant à travers l'élément de restriction de débit (22), et pour adapter la valeur de consigne maximale de la position ouverte (Pos_max) et/ou la valeur de consigne maximale du débit (Vmax) et/ou la valeur de consigne maximale du débit de puissance (Pmax) de l'élément de restriction de débit (22) selon un algorithme d'apprentissage générique évaluant les valeurs de consigne entrées, dans lequel
l'unité de commande du dispositif (20) est configurée pour réduire la valeur de consigne maximale à une valeur de consigne maximale réduite lorsqu'une valeur de consigne maximale n'a pas été atteinte ou dépassée par les valeurs de consigne reçues par l'unité de commande du dispositif (20) pendant une période de temps, ou l'unité de commande de dispositif (20) est configurée pour réduire la valeur de consigne maximale à une valeur de consigne maximale réduite lorsqu'une valeur de consigne maximale a été dépassée par l'une quelconque des valeurs de consigne reçues par l'unité de commande de dispositif (20) et qu'une pluralité de valeurs de consigne reçues par l'unité de commande de dispositif (20) après que la valeur de consigne maximale a été dépassée est inférieure à la valeur de consigne maximale.

2. Unité de commande de débit (2) selon la revendication 1, dans laquelle
l'unité de commande de dispositif (20) est configurée pour adapter la valeur de consigne maximale de la position ouverte (Pos_max) de l'élément de restriction de débit (22) et/ou du débit (Vmax) s'écoulant à travers l'élément de restriction de débit (22) et/ou du débit de puissance (Pmax) s'écoulant à travers l'élément de restriction de débit (22) en réduisant la valeur de consigne maximale à une valeur de consigne maximale réduite.

3. Unité de commande de débit (2) selon la revendication 1 ou 2, dans laquelle la période de temps est une période opérationnelle définie par l'un des critères suivants :
(a) la période de temps est déterminée par des moments où les conditions opérationnelles sont (a) la période de temps est déterminée par des moments où les conditions opérationnelles sont susceptibles de changer, par exemple en raison de changements environnementaux tels que les changements saisonniers, le jour ou la nuit, des conditions météorologiques prédéfinies, un changement d'utilisation, un changement de charges, etc.; ou
(b) la période de temps est une période de temps fixe, par exemple x heures, y jours, z mois, jour/nuit, etc., où x, y, z peuvent être n'importe quel nombre prédéterminé ou calculé; ou
(c) la période de temps est déterminée par un nombre de valeurs (mesurées) N, où N > 2, qu'il y ait plusieurs valeurs N provenant du passé (mesurées), des valeurs extrapolées à partir de valeurs passées, des valeurs calculées à partir de valeurs passées (par exemple, la moyenne pondérée de N valeurs passées).

4. Unité de commande de débit (2) de l'une quelconque des revendications précédentes, dans laquelle l'algorithme d'apprentissage générique comprend un algorithme statistique, un filtrage de données et/ou un apprentissage automatique.

5. Unité de commande de débit (2) de l'une quelconque des revendications précédentes, dans laquelle
l'unité de commande de dispositif (20) est configurée pour fournir une commande de position de l'actionneur (21) et de l'élément de restriction de débit (22), respectivement, et/ou une commande de débit du fluide s'écoulant à travers l'élément de restriction de débit (22) et/ou une commande de débit de puissance du fluide s'écoulant à travers l'élément de restriction de débit (22).

6. Unité de commande de débit (2) selon l'une quelconque des revendications précédentes, dans laquelle
l'unité de commande de débit (2) comprend un capteur de débit (23) pour mesurer le débit (V) du fluide s'écoulant à travers l'élément de restriction de débit (22), et un régulateur de débit (24) pour la commande par rétroaction du débit s'écoulant à travers l'élément de restriction de débit (22).

7. Unité de commande de débit (2) selon l'une quelconque des revendications précédentes, dans laquelle
l'unité de commande de débit (2) comprend un capteur de débit (23) pour mesurer le débit (V) du fluide s'écoulant à travers l'élément de restriction de débit (22) et un capteur de différence de température pour fournir une différence de température entre une température d'alimentation et une température de retour d'un fluide, et un contrôleur de puissance pour contrôler en rétroaction la puissance s'écoulant à travers l'élément de restriction de débit (22).

8. Unité de commande de débit (2) de l'une quelconque des revendications précédentes 1 à 7, dans laquelle
l'unité de commande de débit (2) est un ensemble de soupapes, et l'élément de restriction de débit (22) est une soupape.

9. Unité de commande de débit (2) de l'une quelconque des revendications précédentes 1 à 7, dans laquelle
l'unité de commande de débit (2) est une unité à volume d'air variable (VAV), l'élément de restriction de débit (22) comprend au moins une lame de registre, et l'unité de régulation de débit (2) comprend un capteur de débit.

10. Procédé de régulation d'une unité de commande de débit (2), comprenant les étapes suivantes:
(a) Produire une pluralité de valeurs de consigne d'une position ouverte (Pos_set') d'un élément de restriction de débit (22) de l'unité de commande de débit (2) et/ou une pluralité de valeurs de consigne d'un débit (Vset') et/ou une pluralité de valeurs de consigne d'un débit de puissance (Pset') d'un fluide s'écoulant à travers l'élément de restriction de débit (22) de l'unité de commande de débit (2) au cours du temps en réponse à l'évaluation de valeurs de consigne reçues d'une unité externe (1) et/ou de paramètres enregistrés,
(b) régler une valeur de consigne maximale de la position ouverte (Pos_max) de l'élément de restriction de débit (22) et/ou du débit (Vmax) et/ou du débit de puissance (Pmax), et adaptation de la valeur de consigne maximale de la position ouverte (Pos_max) de l'élément de restriction de débit (22) et/ou du débit (Vmax) s'écoulant à travers l'élément de restriction de débit (22) et/ou du débit de puissance (Pmax) s'écoulant à travers l'élément de restriction de débit (22) selon un algorithme d'apprentissage générique évaluant les valeurs de consigne entrées, dans lequel
la réduction de la valeur de consigne maximale à une valeur de consigne maximale réduite est effectuée lorsqu'une valeur de consigne maximale n'a pas été dépassée par les valeurs de consigne reçues par une unité de commande de dispositif (20) pendant une période de temps, ou la réduction de la valeur de consigne maximale à une valeur de consigne maximale réduite est effectuée lorsqu'une valeur de consigne maximale a été dépassée par l'une quelconque des valeurs de consigne reçues par une unité de commande de dispositif (20) et qu'une pluralité de valeurs de consigne reçues par l'unité de commande de dispositif (20) immédiatement après que la valeur de consigne maximale a été dépassée est inférieure à la valeur de consigne maximale.

11. Procédé selon la revendication 10, dans lequel
l'étape (b) comprend l'adaptation de la valeur de consigne maximale de la position ouverte (Pos_max) de l'élément de restriction de débit (22) et/ou du débit (Vmax) s'écoulant à travers l'élément de restriction de débit (22) et/ou du débit de puissance (Pmax) s'écoulant à travers l'élément de restriction de débit (22) en réduisant la valeur de consigne maximale à une valeur de consigne maximale réduite.

12. Procédé selon la revendication 10 ou 11, dans lequel la période de temps est une période opérationnelle définie par l'un des critères suivants :
(a) la période de temps est déterminée par des moments où les conditions opérationnelles sont susceptibles de changer, par exemple en raison de changements environnementaux tels que les changements saisonniers, le jour ou la nuit, des conditions météorologiques prédéfinies, un changement d'utilisation, un changement de charges, etc.; ou
(b) la période de temps est une période de temps fixe, par exemple x heures, y jours, z mois, jour/nuit, etc., où x, y, z peuvent être n'importe quel nombre prédéterminé ou calculé; ou
(c) la période de temps est déterminée par un nombre de valeurs (mesurées) N, où N > 2, qu'il y ait plusieurs valeurs N provenant du passé (mesurées), des valeurs extrapolées à partir de valeurs passées, des valeurs calculées à partir de valeurs passées (par exemple, la moyenne pondérée de N valeurs passées).

13. Procédé selon l'une quelconque des revendications 10 à 12, dans lequel l'algorithme d'apprentissage générique comprend un algorithme statistique, un filtrage de données et/ou un apprentissage automatique.
